# EUROPÄISCHE PATENTSCHRIFT

(11) **EP 3 379 079 B1**
(45) Veröffentlichungstag und Bekanntmachung des Hinweises auf die Patenterteilung: **16.10.2019**
(21) Anmeldenummer: 17162523.9
(22) Anmeldetag: 23.03.2017
(51) Int. Cl.: F03D 80/50, F03D 13/10, F03D 13/20, F03D 80/80, E04G 1/18, E04G 1/36

(54) **EINRICHTUNG ZUR MONTAGE UND WARTUNG EINES TURMS FÜR EINE WINDENERGIEANLAGE UND VERWENDUNG DERSELBEN**
DEVICE FOR ASSEMBLY AND MAINTENANCE OF A TOWER FOR A WIND TURBINE AND USE OF THE SAME
DISPOSITIF DE MONTAGE ET D'ENTRETIEN D'UNE TOUR D'ÉOLIENNE ET SON UTILISATION

(43) Veröffentlichungstag der Anmeldung: 26.09.2018
(73) Patentinhaber: Nordex Energy GmbH, 22419 Hamburg (DE)
(72) Erfinder: Derksen, Juri, 32427 Minden (DE); Türk, Ibrahim, 22769 Hamburg (DE)
(74) Vertreter: Garrels, Sabine

(56) Entgegenhaltungen:
- WO-A1-03/002447
- CN-U- 202 360 308
- DE-U1-202014 106 139
- JP-A- S55 105 060
- US-A1- 2008 302 605
- US-A1- 2011 140 437

## Beschreibung

Die Erfindung betrifft eine Einrichtung zur Montage und Wartung von Türmen für Windenergieanlagen. Die erfindungsgemäße Lösung betrifft eine Befahreinrichtung für die innenseitige Montage und Wartung von Türmen, insbesondere von Stahltürmen in Sektionsbauweise. Weiterhin wird die Verwendung der Einrichtung unter Schutz gestellt.

Um die im Verhältnis höheren Windgeschwindigkeiten in größeren Höhen zu den Windgeschwindigkeiten in Bodennähe nutzen zu können, werden immer größere Nabenhöhen angestrebt und größere Rotorblätter eingesetzt. Damit einhergehend werden höhere Türme benötigt, dies führt aus Stabilitätsgründen zu größeren Durchmessern derselben. Aufgrund von Logistikproblemen, insbesondere beim Überlandtransport, sind die Durchmesser und Längen der zu transportierenden Komponenten der Windenergieanlagen begrenzt. Daher werden zunächst Segmente und Sektionen eines Turms im Herstellerwerk vorkonfektioniert und erst am Errichtungsort zusammengebaut. Die entsprechenden Segmente und Sektionen werden durch Verbindungsmittel miteinander verbunden.

Es sind verschiedene Montagekonzepte am Errichtungsort bekannt. Beispielsweise werden Einzelsegmente am Boden mit Hilfe eines oder mehrerer Kräne und Montagevorrichtungen zu Sektionen vormontiert. Nachfolgend werden die vormontierten Sektionen mit einem geeigneten höheren Kran aufeinandergesetzt und miteinander verschraubt. Nachteile dieses Konzepts sind hohe Einsatzkosten, da mehrere Kräne gleichzeitig erforderlich sind. Zudem müssen zwei Montageteams, nämlich am Boden und auf dem Turm, gleichzeitig tätig sein. Weiterhin sind zusätzliche Montagevorrichtungen am Boden erforderlich. Für eine liegende Vormontage der Turmsektionen wird zudem eine große ebene Fläche am Boden benötigt, was vielerorts nicht gegeben ist.

Bei einer weiteren Montageweise werden einzelne Segmente mit Hilfe eines außerhalb des Turms stehenden Krans montiert. Nachteilig ist hierbei, dass eine Einzelmontage relativ lange dauert und somit hohe Kosten für den benötigten entsprechend hohen Kran entstehen. Ferner müssen bei den großen Durchmessern der Türme entsprechende Montagebühnen und Montagevorrichtungen ständig mit dem Kran verstellt werden. Schließlich muss eine Befahranlage für den Betrieb der Windenergieanlage zusätzlich eingerichtet werden.

Die WO 2012/007226 A2 offenbart eine Montagevorrichtung für die Montage eines Windturbinenturms mit einem vertikal ausgerichteten Mast, an welchem ein im Wesentlichen horizontal ausgerichteter Ausleger gehaltert ist. Der Ausleger trägt eine Plattform oder einen Hubarbeitskorb. Weiterhin ist der Ausleger an seinem distalen Ende mit Haltemitteln verbunden, welche ein Turmbausegment halten. Der Turmabschnitt wird um den vertikal ausgerichteten Mast herum gebaut.

In der DE 10 2005 012 497 A1 wird eine Arbeitsbühne zur Verwendung im Inneren eines turmartigen Bauwerks beschrieben, die auch dann verwendet werden kann, wenn der Turm durch einen Aufbau verschlossen ist. Die Arbeitsbühne weist eine scherengitterartige Tragstruktur und eine auf der Tragstruktur angeordnete Arbeitsplattform auf. Diese Arbeitsbühne kann sich durch die scherengitterartige Tragstruktur an unterschiedliche Innendurchmesser der turmartigen Bauwerke anpassen.

Die DE 10 2013 208 760 A1 schlägt eine Windenergieanlage mit einem Turm vor, welcher eine Mehrzahl von Turmsegmenten aufweist. Die Windenergieanlage weist ferner ein sich zumindest teilweise entlang der Länge des Turms erstreckendes Führungsseil sowie eine Arbeitsbühne auf, welche an dem Führungsseil befestigbar ist und über ein Fahrseil nach oben und unten bewegt werden kann.

US 2011/0 140 437 A1 betrifft eine selbsttragende Plattform für einen Windkraftanlagenturm und beinhaltet eine Gitterkonstruktion als tragendes Element. Die Gitterstruktur nimmt die Last auf der Plattform sowie das Gewicht der Plattform selbst auf und überträgt die Last typischerweise direkt auf eine Wand des Turms, in dem sie montiert ist. Die Plattform wird direkt an der Turmwand befestigt, z.B. durch Schweißen, Schrauben oder Kleben.

CN 202360308 U bezieht sich auf einen Turm einer Windkraftanlage, der eine kreisförmige Plattform aus Stahlplatten umfasst. Auf der Plattform sind eine Leiteröffnung und ein Kabeldurchführungsloch angeordnet. Die besondere Oberfläche der Plattform verbessert ihre Rutschfestigkeit.

JP S55105060 A offenbart einen Kletterkran mit einem Mast in der Mitte eines Stahlturms. Eine Gerüstvorrichtung, an dessen Ende ein Arbeitskorb angeordnet ist, ist beweglich am Mast befestigt, um den Arbeitskorb halten und schwenken zu können.

In DE 20 2014 106 139 U1 wird eine Turmarbeitsbühne offenbart, welche mehrere teleskopierbare, an unterschiedliche Turm-Innendurchmesser anpassbare und schwenkbare, in einer gemeinsamen Ebene angeordnete Tragarme aufweist. Von jedem Tragarm erstreckt sich an dessen Ende ein Befestigungsausleger mit Anschlussmittel, durch welche die Turmarbeitsbühne innerhalb des Turms an dort vorgesehenen Anbaukonsolen angehängt werden kann.

WO 03/002447 A1 offenbart einen Aufzug, welcher an einer Leiter verfahrbar angeordnet ist und auch innerhalb eines Turms einer Windenergieanlage genutzt werden kann.

In US 2008/0 302 605 A1 wird eine größenverstellbare, ringförmige Arbeitsplattform mit einer Vielzahl von sich überlappenden Abschnitten, die sich von einem zentralen Kern aus erstrecken, gezeigt. Die Abschnitte beinhalten separate, sich überlappende Paneele, die in Bezug auf den zentralen Kern hydraulisch hin und her bewegbar sind, so dass eine Anpassung an variable Turmdurchmesser ermöglicht werden. Ein Gerüst ist vertikal in der Mitte der Plattform aufgestellt und für einen separaten, verfahrbaren Lift vorgesehen.

### Darstellung der Erfindung

Es ist somit Aufgabe der vorliegenden Erfindung, eine Arbeitsbühne vorzusehen, welche im Inneren eines turmartigen Bauwerkes verwendet werden kann, die jedoch die Nachteile der im Stand der Technik bekannten Arbeitsbühnen oder Montageplattformen beseitigt. Eine weitere Aufgabe der Erfindung ist es, die Komplexität der Montage zu vereinfachen und eine Arbeitsbühne vorzusehen, welche sowohl als Montageplattform als auch als Wartungs- und Serviceplattform nutzbar ist. Die Montage, der Betrieb und der Service sollen für das eingesetzte Personal sicherer gestaltet werden. Weiterhin sollen die Kosten für Installation, Wartung und Service von Türmen für Windenergieanlagen reduziert werden.

Die Aufgabe wird gelöst durch eine Einrichtung zur Montage und Wartung zur Verwendung im Inneren eines Turms, bevorzugt eines Stahlturms, für eine Windenergieanlage mit einer Arbeitsplattform mit einer Basisplattform, die einen Ausschnitt für eine vertikale Tragstruktur aufweist, wobei die Basisplattform kreisförmig ausgebildet ist und am Umfang zumindest ein bogenförmiges Führungs- und/oder Lagerelement aufweist.

Die Einrichtung weist erfindungsgemäß zwecks Anpassung an verschiedene Turminnendurchmesser wenigstens einen radial ein- und ausfahrbaren sowie begehbaren Steg für Montage-, Wartungs- und Servicepersonal auf, welcher an der Basisplattform und einer Führungsplattform, vorzugsweise am Umfang, bewegbar gelagert ist. Zum einen ist somit der wirksame Durchmesser der Montage-, Wartungs- und Serviceplattform schnell und einfach an verschiedene höhenabhängige Innendurchmesser des Stahlturms anpassbar. Zum anderen kann beispielsweise während der Montagearbeiten nach dem Verbinden eines Sektionssegments mit einem horizontal benachbarten Sektionssegment der Steg um einen vorbestimmten Winkel um die vertikale Achse der Mastsektion bewegt werden, sodass der Steg für das Montagepersonal zur Montage oder Inspektion eines benachbarten Sektionssegments optimal positioniert ist. Das radiale Einfahren und Ausfahren des Steges kann auch als temporäres, betriebsmäßiges Verkürzen bzw. Verlängern des Stegs bezeichnet werden. Das radiale Einfahren und Ausfahren des Steges kann z.B. teleskopisch, wie ein 2- oder 3-faches Schubladenschienenpaar oder durch eine Scherengitterkonstruktion erfolgen. Der Steg weist bevorzugt Begehbleche auf, die beim Zusammenschieben des Steges aufeinander geschoben werden können. Die Antriebe der Stege können mechanisch, elektromechanisch, pneumatisch oder hydraulisch ausgeführt sein.

In einer besonders bevorzugten Weiterbildung weist der oder jeder Steg an einem von der Basisplattform wegweisenden Ende eine Arbeitsbühne auf, welche einteilig oder in Form von Teilarbeitsbühnen mehrteilig ausgebildet sein kann. Diese Teilarbeitsbühnen können links, rechts oder links und rechts vorgesehen sein und haben bevorzugt jeweils eine Schwenklagerung, um sie horizontal, d.h. um eine vertikale Achse schwenken zu können. Dazu weist der Steg und/oder die Arbeitsbühne einen Antrieb zum Schwenken um eine vertikale Achse auf. Die Schwenklagerung ermöglicht eine einfache Anpassung an die jeweilige Krümmung der Turmwandung, wobei das Schwenken manuell oder mittels eines Antriebs realisiert sein kann, welcher mit dem Antrieb zum Ein- und Ausfahren des Steges mechanisch gekoppelt oder als separater - elektrischer, pneumatischer oder hydraulischer und/oder mechanischer - Antrieb ausgebildet ist.

Weiterhin ist jede Arbeitsplattform, insbesondere vollständig mit einem Geländer eingefasst. Zur Vermeidung eines versehentlichen Durchgriffs des Montage-, Wartungs- und Servicepersonals während der Bewegung der Arbeitsplattform können zudem Sicherheitslichtgitter in bestimmten Abschnitten vorgesehen sein. Die Geländer können als sogenannte Teleskopkonstruktion oder als Seilkonstruktion mit Umlenkrollen ausgeführt sein, um auch hier verschiedenen Steglängen Rechnung zu tragen.

Vorteilhafterweise weist die Einrichtung zwei separate elektrische Hubantriebe auf, die jeweils wenigstens einen Elektromotor und eine Bremsvorrichtung umfassen, wobei die Hubantriebe an der Basisplattform und/oder an der Führungsplattform gehaltert sind. Weiterhin bevorzugt ist an der Basisplattform und/oder an der Führungsplattform wenigstens ein elektrischer und/oder hydraulischer Antrieb zum Bewegen eines ersten Steges entlang dem bogenförmigen Führungs- und/oder Lagerelement, gehaltert. Jeder der Antriebe kann als elektrischer, pneumatischer oder hydraulischer und/oder mechanischer Antrieb ausgebildet sein. Somit ist die Basisplattform nebst dem wenigstens einen Steg selbstständig bewegbar, so dass separate Seile, Seilscheiben und/oder Seiltrommeln verzichtbar sind. In einer bevorzugten Ausgestaltung ist mindestens ein elektrischer Antrieb, nämlich der Hubantrieb und/oder der Antrieb zum Bewegen des Steges entlang dem bogenförmigen Führungs- und/oder Lagerelement als elektrischer Linearantrieb, insbesondere als Linearmotor ausgebildet.

Die erfindungsgemäße Ausgestaltung der Einrichtung schafft die Möglichkeit, zu jeder Zeit mit der Arbeitsplattform über die gesamte Höhe des Turmes, d. h., vom Boden oder genauer gesagt von einer unteren stationären Zugangs- und/oder Einbautenplattform bis direkt unterhalb der Gondel zu fahren. Ein weiterer Vorteil besteht im Verzicht auf einen zusätzlichen Lift oder eine separate Befahranlage. Ferner sind Seilteams für die Wartung von Schraubverbindungen, Flugfeuern, Kabelverbindungen usw. nicht erforderlich, d.h., die Sicherheit und Zugänglichkeit wird für das Personal erheblich verbessert. Letztlich senkt der Verzicht auf Zwischenplattformen innerhalb des Turms die Kosten für Einbauten.

In einer besonders bevorzugten Ausgestaltung ist an der Basisplattform eine Bedien- und Anzeigeeinrichtung gehaltert, welche zum Anzeigen der vertikalen Position der Arbeitsplattform und/oder Basisplattform im Turm ausgebildet und eingerichtet ist. Die Bedien- und Anzeigeeinrichtung steht vorteilhafterweise in Wirkverbindung mit einer Steuerungseinrichtung, welche ausgebildet und eingerichtet ist, die zur Turmhülle weisende maximal ausfahrbare radiale Position des Stegs oder der Stege in Abhängigkeit von der vertikalen Position der Basisplattform im Turm auf einen vorgebbaren Wert zu begrenzen. Somit wird ein Kontakt mit der oder eine Beschädigung der Turmhülle aufgrund einer Fehlbedienung ausgeschlossen.

Die Verwendung der Einrichtung zur Montage und Wartung eines Turms für eine Windenergieanlage erfolgt erfindungsgemäß als Montage-, Wartungs-, Service-, Rettungs- und/oder Beförderungsplattform.

In einer nicht beanspruchten Ausführung wird die Aufgabe weiterhin gelöst durch einen Turm, insbesondere Stahlturm mit einer Mehrzahl von Turmsektionen, für eine Windenergieanlage mit einer im Innern des Turms angeordneten, von der Turmhülle beabstandeten selbsttragenden mastförmigen Tragstruktur, wobei die Tragstruktur wenigstens ein Führungselement zum Führen einer vertikal bewegbaren Arbeitsplattform aufweist. Das Führungselement kann als Pfosten der Tragstruktur selbst oder als mindestens eine an der Tragstruktur gehalterte Führungsschiene ausgebildet sein.

Vorteilhafterweise ist die Tragstruktur als Mast ausgebildet, der eine Mehrzahl von Mastsektionen umfasst, wobei der Mast bevorzugt als Gittermast, Hohlprofil oder Metallwinkelprofil ausgebildet sein kann, welcher im Wesentlichen parallel zu einer vertikalen Turmachse im Inneren des Turms angeordnet ist. In einer Abwandlung kann der Mast auch aus gekantetem oder gebogenem Blech gefertigt sein. Um innerhalb des Mastes insbesondere eine Leiter oder andere Steigmittel und/oder Kabel aufnehmen zu können, ist der Mastquerschnitt als offenes oder geschlossenes rohrförmiges Hohlprofil, als mehrkantiges Metallwinkelprofil oder als Gittermast ausgebildet.

Ein derartiger Mast bietet eine Vielzahl von Vorteilen, beispielsweise kann der Mast zunächst für eine Befahranlage, einen Lift, eine Serviceplattform und insbesondere für die erfindungsgemäße Arbeitsplattform als Träger genutzt werden. Der Mast kann weiterhin für Einbauten jeder Art, so für die Befestigungsmittel für Leistungs- und Versorgungskabel, für Leitern und Beleuchtungskörper genutzt werden. Hiermit wird in vorteilhafter Weise eine Bearbeitung und Schwächung der Turmhülle vermieden.

In einer bevorzugten Ausgestaltung weisen die Mastsektionen jeweils ein Maschinenelement, wie insbesondere eine Zahnstange, für ein vertikales Bewegen der Arbeitsplattform und/oder Führungsplattform mittels einer Ritzel-Getriebe-Motor-Baugruppe auf. Weiterhin ist zum Führen der Arbeitsplattform als Spurführung bzw. Linearführung wenigstens ein Führungselement, wie eine Führungsschiene oder ein Paar Führungsschienen, vorgesehen. Es sind auch andere Antriebsmöglichkeiten nicht ausgeschlossen, wie z.B. ein Seil-Treibscheiben-System oder ein Linearantrieb bzw. ein Linearmotor, wobei eine Zahnstange in diesen Fällen verzichtbar wäre. Für das Linearantriebssystem wäre eine an den Mastsektionen gehalterte Sekundärschiene als Teil eines Linearmotors vorzusehen. Zudem sind wenigstens zwei Linearwirbelstrombremseinheiten vorzusehen. Das Hubantriebssystem kann zudem eine seilgeführte Gewichtsausgleichmasse aufweisen.

Zumindest eine, vorzugsweise jede Mastsektion weist eine Sicherheitseinrichtung mit einer Bremsvorrichtung und/oder Fangvorrichtung für die vertikal bewegbare Arbeitsplattform auf, wobei diese Sicherheitseinrichtungen und Vorrichtungen unabhängig von einer im Antrieb integrierten Bremse wirken.

Schließlich können die Arbeitsplattformen verschieden umfangreich ausgestatten sein, nämlich in Hinblick auf eine jeweils aktuelle Funktion, wie zunächst, zur Montage des Turmes bzw. der Windenergieanlage, als Montageplattform mit umfangreicherer Ausstattung, später, nachdem die Montage abgeschlossen ist und die Windenergieanlage sich in Betrieb befindet, als Wartungs- oder Serviceplattform mit jeweils entsprechend reduzierter Ausstattung.

### Ausführung der Erfindung

Die Erfindung wird anhand eines Ausführungsbeispiels erläutert. Hierzu zeigen
- Fig. 1: eine perspektivische Ansicht einer Windenergieanlage,
- Fig. 2: eine perspektivische Ansicht eines Turms in einer ersten Errichtungsphase,
- Fig. 3: eine perspektivische Ansicht eines Turms in einer zweiten Errichtungsphase,
- Fig. 4: eine perspektivische Ansicht eines Fundaments mit einer ersten Mastsektion,
- Fig. 5: eine perspektivische Ansicht eines Fundaments mit einer Mastsektion und zwei Arbeitsplattformen,
- Fig. 6: das Montieren eines ersten Sektionssegments in einer perspektivische Ansicht,
- Fig. 7: das Fixieren des ersten Sektionssegments in einer perspektivische Ansicht,
- Fig. 8: eine perspektivische Ansicht einer Serviceplattform mit zwei Stegen in einem unteren Turmabschnitt,
- Fig. 9: eine perspektivische Ansicht einer Serviceplattform mit zwei Stegen in einem oberen Turmabschnitt,
- Fig. 10: eine Draufsicht einer Serviceplattform mit zwei Stegen in einem unteren Turmabschnitt und
- Fig. 11: eine Draufsicht einer Serviceplattform mit zwei Stegen in einem oberen Turmabschnitt.

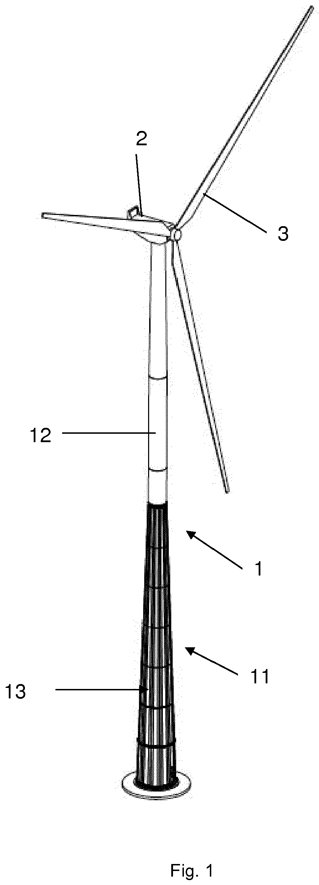

Die Fig. 1 zeigt eine perspektivische Ansicht einer Windenergieanlage. Der Stahlturm 1 ist in der Vertikalen in mehrere Turmsektionen 11 und 12 unterteilt. In dem unteren, zum Boden gerichteten Abschnitt - mit größerem Durchmesser - bestehen die Turmsektionen 11 aus einzelnen Sektionssegmenten 13. Der obere Abschnitt - mit geringerem Durchmesser - weist dagegen Turmsektionen 12 in geschlossener Stahlrohrbauart auf. Auf der obersten Turmsektion 12 ist eine um die Mittelachse des Turmes schwenkbare Gondel 2 gelagert, welche u. a. ein Getriebe, einen Generator sowie eine Rotorwelle beinhaltet. Mit der Rotorwelle ist eine Rotornabe verbunden, an der drei Rotorblätter 3 gelagert sind.

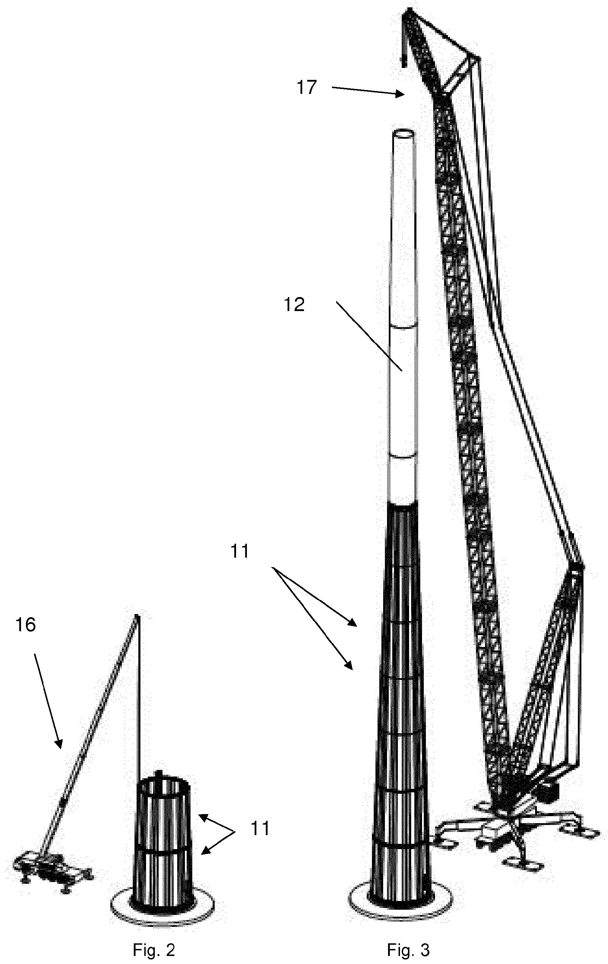

Fig. 2 zeigt das Errichten eines Stahlturms 1 in Segmentbauweise. Dazu werden die Turmsektionen 11, welche aus einzelnen Sektionssegmenten 13 bestehen, nach und nach aufgebaut. Für die Einzelmontage der Sektionssegmente 13 am Errichtungsort wird zunächst lediglich ein erster kleinerer mobiler Kran 16, beispielsweise ein Teleskopkran eingesetzt, wie die Fig. 2 erkennen lässt. Nachfolgend wird für einen kurzen Zeitraum ein zweiter, insbesondere größerer Kran 17 für das Montieren der oberen Turmsektion(en) 12 der Windenergieanlage benötigt, wie die Fig. 3 zeigt.

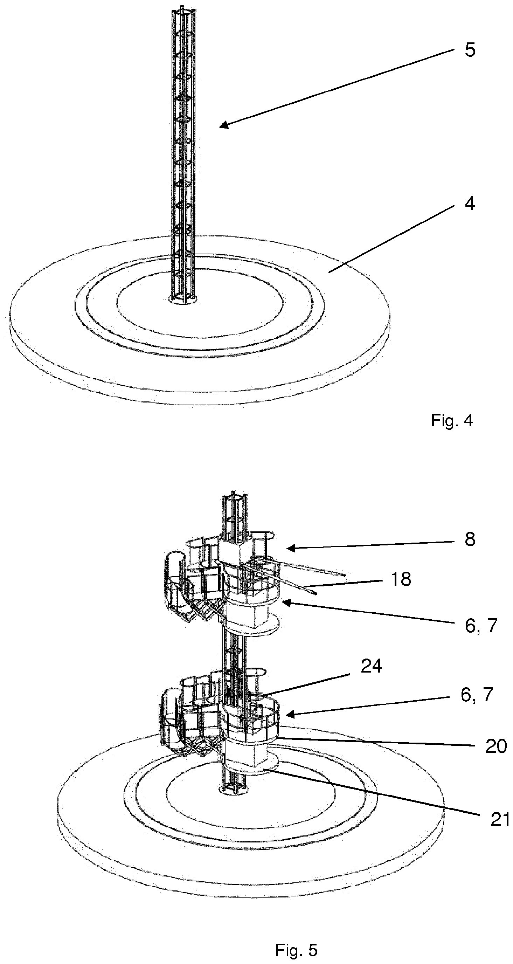

Die Figuren 4 bis 7 zeigen verschiedene Zwischenstufen beim Errichten des Stahlturms 1. In Fig. 4 ist eine erste Mastsektion 5 bereits auf einem Fundament 4 verankert, wobei die Mastsektion 5 zentral oder außermittig zur späteren Turmachse positioniert sein kann. Die Mastsektion 5 ist im Ausführungsbeispiel als Gittermast ausgebildet. Wie die Fig. 5 erkennen lässt, ist an der Mastsektion 5 die erfindungsgemäße Einrichtung mit vertikal bewegbaren und horizontal verstellbaren Arbeitsplattformen 6, nämlich eine untere und eine obere Montageplattform 7 sowie eine Stützarmeinheit 8 gelagert und geführt. Auf den Montageplattformen 7 befindet sich während der Montage das Montagepersonal. Die Montageplattformen 7 sowie die Stützarmeinheit 8 sind unabhängig voneinander entlang der Mastsektion(en) 5 vertikal bewegbar. Die Arbeitsplattformen 6 bzw. die Montageplattformen 7 weisen jeweils eine Basisplattform 20 und eine zur Basisplattform 20 beabstandete Führungsplattform 21 auf, welche durch ein Wandelement miteinander verbunden sind. Die Führungsplattform 21 und das Wandelement sind ferner zur Halterung von nicht dargestellten Antriebsmitteln vorgesehen.

Die Arbeitsplattformen 6 bzw. die Montageplattformen 7 weisen im Ausführungsbeispiel, zwecks Anpassung an verschiedene Turminnendurchmesser, jeweils zwei radial ausfahrbare und begehbare Stege 22 auf, welche an der Basisplattform 20 und der Führungsplattform 21, vorzugsweise jeweils am Umfang, bewegbar gelagert sind. Der wirksame Durchmesser der Montageplattform 7 ist somit schnell und einfach an verschiedene höhenabhängige Innendurchmesser des Stahlturms 1 anpassbar. Das radiale Einfahren und Ausfahren des Steges 22 kann z.B. teleskopisch, beispielsweise wie ein 2- oder 3-faches Schubladenschienenpaar oder, wie in den Figuren dargestellt, mittels eines Scherengitters erfolgen. Wie die Figuren 5 bis 9 weiter erkennen lassen, weist jeder Steg 22 an dem von der Basisplattform 20 wegweisenden Ende eine quer angeordnete Arbeitsbühne 23 auf, welche im Ausführungsbeispiel mehrteilig ausgebildet ist und jeweils zwei Teilarbeitsbühnen umfasst. Diese Teilarbeitsbühnen können links, rechts oder links und rechts vorgesehen sein und haben bevorzugt eine Schwenklagerung zum Schwenken um eine vertikale Achse. Die Schwenklagerung ermöglicht eine einfache Anpassung an die jeweilige Krümmung der Turmhülle 10. Die Schwenkbewegung kann dabei manuell oder mittels eines nicht dargestellten Antriebs ausgeführt werden. Weiterhin ist jede der Arbeitsplattformen 6 bzw. Montageplattformen 7 vorschriftsmäßig, insbesondere vollständig mit einem Geländer 24 eingefasst. Die Geländer 24 können als Teleskopkonstruktion oder als Seilkonstruktion mit entsprechenden Umlenkrollen ausgeführt sein, um verschieden weit ausgefahrenen Stegen 22 Rechnung zu tragen.

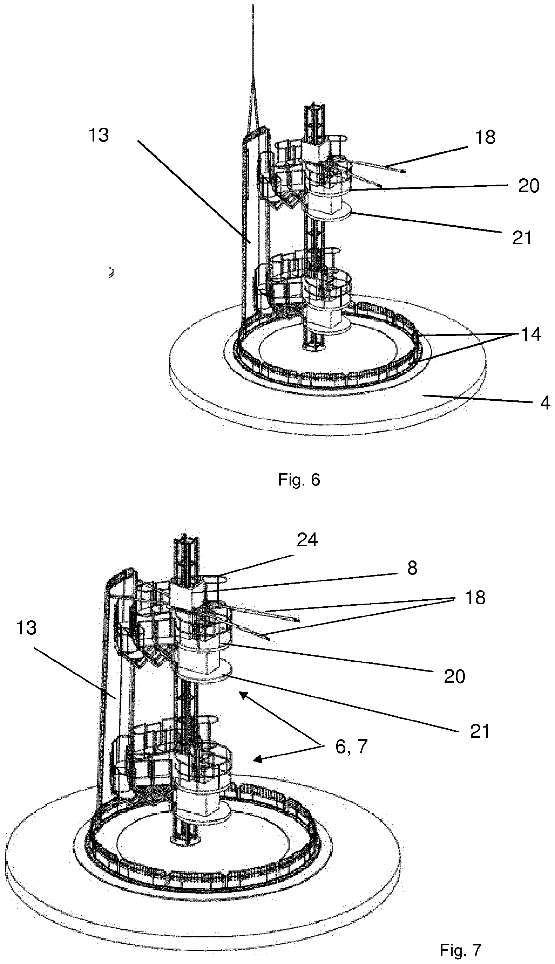

Wie insbesondere die Fig. 6 und 7 zeigen, sind auf dem Fundament 4 Turmfußsegmente 14 zur Befestigung der einzelnen Sektionssegmente 13 der untersten Turmsektion 11 in einem vorgegebenen Durchmesser um die erste Mastsektion 5 herum angeordnet und befestigt. Mittels des ersten Krans 16 (Fig. 2) werden nach und nach die einzelnen Sektionssegmente 13 aufgestellt. Jedes Sektionssegment 13 wird durch einen oder mehrere Stützarme 18 zur Mastsektion 5 fixiert.

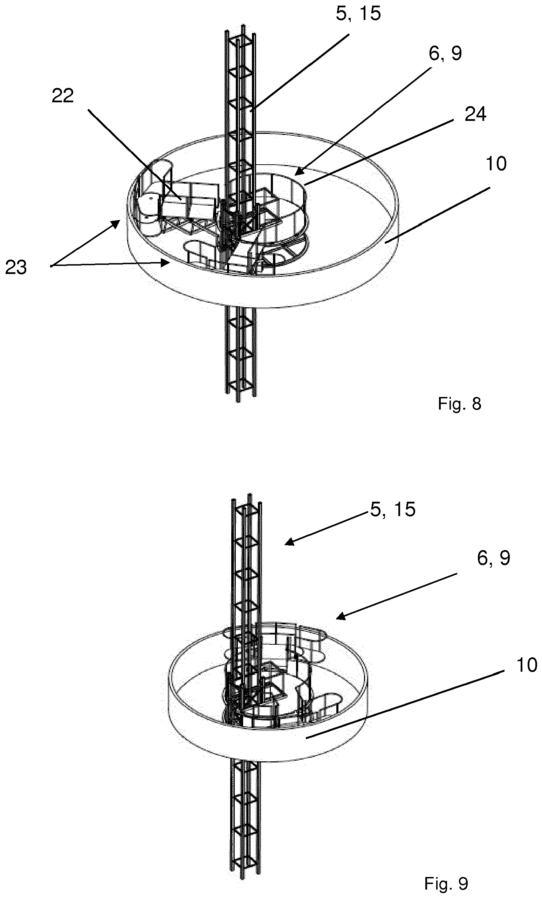

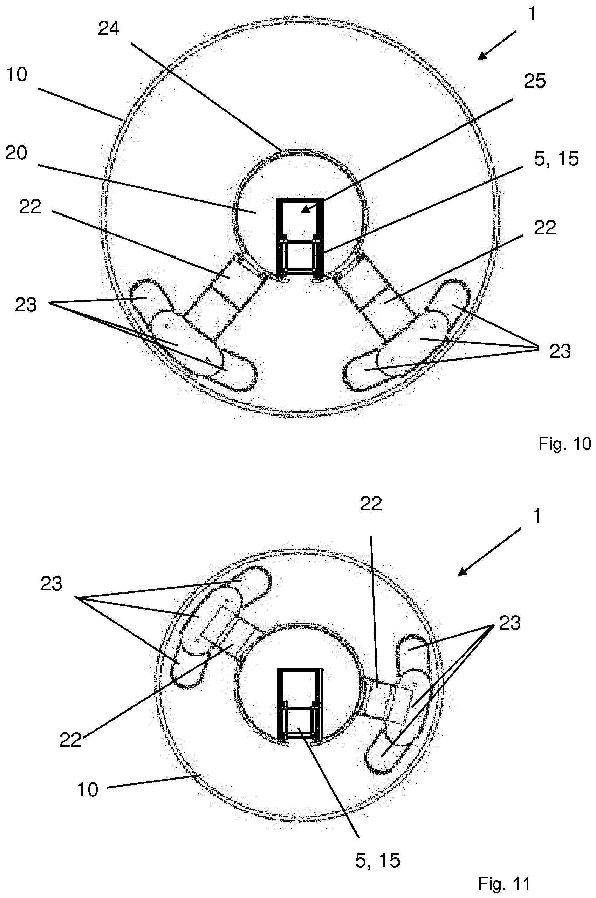

Die Fig. 8 zeigt eine perspektivische Ansicht einer Serviceplattform 9 mit zwei Stegen 22 und zwei Arbeitsbühnen 23 in einem unteren Turmabschnitt, welcher einen größeren Durchmesser aufweist, wobei lediglich ein Ring der Turmhülle 10 dargestellt ist. Die Stege 22 sind dort vollständig ausgefahren. Die Fig. 10 zeigt die entsprechende Draufsicht der Serviceplattform 9 mit der Basisplattform 20, zwei Stegen 22 und zwei Arbeitsbühnen 23 in demselben Turmabschnitt.

Die Fig. 9 zeigt eine perspektivische Ansicht einer Serviceplattform 9 mit zwei Stegen 22 und zwei Arbeitsbühnen 23 in einem oberen Turmabschnitt, welcher einen kleineren Durchmesser aufweist, wobei lediglich ein Ring der Turmhülle 10 dargestellt ist. Die Stege 22 sind dort nahezu vollständig eingefahren. Die Fig. 11 zeigt die entsprechende Draufsicht der Serviceplattform 9 mit zwei Stegen 22 und zwei Arbeitsbühnen 23 in demselben Turmabschnitt.

Die in den Fig. 8 bis 10 dargestellte Serviceplattformen sind jeweils mit zwei Stegen 22 und zwei Arbeitsbühnen 23 ausgeführt. Eine kostenreduzierte, nicht dargestellte Ausführung weist bevorzugt lediglich einen einzigen Steg 22 und eine einzige Arbeitsbühne 23 auf. Für eine weiter kostenreduzierte, nicht dargestellte Ausführung kann lediglich ein einziger Steg 22 ohne eine damit verbundene Arbeitsbühne 23 vorgesehen sein.

### Bezugszeichen

- 1: Stahlturm
- 2: Gondel
- 3: Rotorblatt
- 4: Fundament
- 5: Mastsektion
- 6: Arbeitsplattform
- 7: Montageplattform
- 8: Stützarmplattform
- 9: Serviceplattform
- 10: Turmhülle
- 11: Turmsektion
- 12: Turmsektion
- 13: Sektionssegment
- 14: Turmfußsegment
- 15: Mast
- 16: Kran
- 17: Kran
- 18: Stützarm
- 20: Basisplattform
- 21: Führungsplattform
- 22: Steg
- 23: Arbeitsbühne
- 24: Geländer

## Patentansprüche

1. Einrichtung zur Montage und Wartung eines Turms für eine Windenergieanlage, wobei die Einrichtung eine Arbeitsplattform (6) zur Verwendung im Inneren des Turms umfasst, die eine Basisplattform (20) umfasst, welche einen Ausschnitt für eine vertikale Tragstruktur aufweist, wobei die Basisplattform (20) kreisförmig ausgebildet ist und am Umfang zumindest ein bogenförmiges Führungs- und/oder Lagerelement aufweist
**dadurch gekennzeichnet, dass**
die Arbeitsplattform (6) wenigstens einen begehbaren, radial ein- und ausfahrbaren Steg (22) aufweist, welcher an der Basisplattform (20) und einer Führungsplattform (21) bewegbar gelagert ist, und dass an der Basisplattform (20) und/oder an der Führungsplattform (21) ein Antrieb, zum Bewegen des Steges (22) entlang dem bogenförmigen Führungs- und/oder Lagerelement, gehaltert ist.

2. Einrichtung nach Anspruch 1, **dadurch gekennzeichnet, dass** der Steg (22) an einem von der Basisplattform (20) wegweisenden Ende eine Arbeitsbühne (23) aufweist, welche ein- oder mehrteilig ausgebildet ist.

3. Einrichtung nach einem der Ansprüche 1 oder 2, **dadurch gekennzeichnet, dass**
an der Basisplattform (20) und/oder an der Führungsplattform (21) zwei separate elektrische Hubantriebe gehaltert sind, wobei die Hubantriebe jeweils wenigstens einen Elektromotor und eine Bremsvorrichtung umfassen.

4. Einrichtung nach einem der Ansprüche 1 bis 3, **dadurch gekennzeichnet, dass** der Steg (22) einen Antrieb zum Ein- und Ausfahren des Steges (22) aufweist.

5. Einrichtung nach den Ansprüchen 2 und 4, **dadurch gekennzeichnet, dass**
der Steg (22) und/oder die Arbeitsbühne (23) einen Antrieb zum Schwenken wenigstens eines Abschnitts der Arbeitsbühne (23) um eine vertikale Achse aufweist, welcher mit dem Antrieb zum Ein- und Ausfahren des Steges (22) mechanisch gekoppelt ist oder als separater Antrieb ausgebildet ist.

6. Einrichtung nach einem der Ansprüche 1 bis 5, **dadurch gekennzeichnet, dass**
die Arbeitsplattform (6) einen zweiten begehbaren, radial ein- und ausfahrbaren Steg (22) aufweist, welcher an der Basisplattform (20) und der Führungsplattform (21) bewegbar gelagert ist, wobei an der Basisplattform (20) und/oder der Führungsplattform (21) wenigstens ein weiterer Antrieb zum Bewegen des zweiten Steges (22) entlang dem bogenförmigen Führungs- und/oder Lagerelement gehaltert ist.

7. Einrichtung nach Anspruch 3, **dadurch gekennzeichnet, dass** die Hubantriebe als elektrische Linearantriebe ausgebildet sind, welche wenigstens einen Linearmotor umfassen.

8. Einrichtung nach wenigstens einem der Ansprüche 3 bis 7, **dadurch gekennzeichnet, dass**
der Antrieb zum Bewegen des wenigstens einen Steges (22) entlang dem bogenförmigen Führungs- und/oder Lagerelement als elektrischer Linearantrieb ausgebildet ist, welcher wenigstens einen Linearmotor umfasst.

9. Einrichtung nach Anspruch 4, **dadurch gekennzeichnet, dass** der Antrieb zum Ein- und Ausfahren des Steges (22) als elektrischer Linearantrieb ausgebildet ist, welcher wenigstens einen Linearmotor umfasst.

10. Einrichtung nach einem der Ansprüche 1 bis 9, **dadurch gekennzeichnet, dass**
an der Basisplattform (20) eine Bedien- und Anzeigeeinrichtung gehaltert ist, wobei die Bedien- und Anzeigeeinrichtung zum Anzeigen der vertikalen Position der Basisplattform (20) im Turm ausgebildet und eingerichtet ist.

11. Einrichtung nach Anspruch 10, **dadurch gekennzeichnet, dass** die Bedien- und Anzeigeeinrichtung mit einer Steuerungseinrichtung in Wirkverbindung steht, wobei die Steuerungseinrichtung ausgebildet und eingerichtet ist, die maximal ausfahrbare radiale Position des Stegs (22) oder der Stege (22) in Abhängigkeit von der vertikalen Position der Basisplattform (20) im Turm auf einen vorgebbaren Wert zu begrenzen.

12. Verwendung der Einrichtung zur Montage und Wartung eines Turms für eine Windenergieanlage nach wenigstens einem der Ansprüche 1 bis 11 als Montage-, Wartungs-, Service-, Rettungs- und/oder Beförderungsplattform.

## Claims

1. A device for the assembly and maintenance of a tower for a wind turbine, the device comprising a working platform (6) for use inside the tower, the working platform comprising a base platform (20) having a cutout for a vertical support structure, wherein the base platform (20) is circular in shape and has at least one arcuate guide and/or bearing element at the periphery,
**characterised in that**
the working platform (6) comprises at least one accessible, radially retractable and extendable catwalk (22), which is movably mounted on the base platform (20) and a guide platform (21), and **in that** a drive for moving the catwalk (22) along the arcuate guide and/or bearing element is mounted on the base platform (20) and/or on the guide platform (21).

2. The device according to claim 1, **characterised in that**
the catwalk (22) has at one end pointing away from the base platform (20) a working platform (23) which is formed in one or more parts.

3. The device according to one of claims 1 or 2, **characterised in that** two separate electric lifting drives are mounted on the base platform (20) and/or on the guide platform (21), wherein the lifting drives each comprise at least an electric motor and a braking device.

4. The device according to one of claims 1 to 3, **characterised in that** the catwalk (22) has a drive for retracting and extending the catwalk (22).

5. The device in accordance with claims 2 and 4, **characterised in that** the catwalk (22) and/or the working platform (23) has a drive for pivoting at least a section of the working platform (23) about a vertical axis, which drive is mechanically coupled to the drive for retracting and extending the catwalk (22) or is designed as a separate drive.

6. The device according to any of claims 1 to 5, **characterised in that** the working platform (6) has a second accessible, radially retractable and extendable catwalk (22) which is movably mounted on the base platform (20) and the guide platform (21), wherein at least a further drive for moving the second catwalk (22) along the arcuate guide and/or bearing element is mounted on the base platform (20) and/or the guide platform (21).

7. The device according to claim 3, **characterised in that**
the lifting drives are designed as electric linear drives which comprise at least one linear motor.

8. The device according to at least one of claims 3 to 7, **characterised in that**
the drive for moving the at least one catwalk (22) along the arcuate guide and/or bearing element is designed as an electric linear drive which comprises at least one linear motor.

9. The device according to claim 4, **characterised in that**
the drive for retracting and extending the catwalk (22) is designed as an electric linear drive which comprises at least one linear motor.

10. The device according to any of claims 1 to 9, **characterised in that**
an operating and display device is mounted on the base platform (20), the operating and display device being designed and arranged to display the vertical position of the base platform (20) in the tower.

11. The device according to claim 10, **characterised in that**
the operating and display device is operatively connected to a control device, the control device being designed and arranged to limit the maximum extendable radial position of the catwalk (22) or the catwalks (22) to a presettable value as a function of the vertical position of the base platform (20) in the tower.

12. Use of the device for the assembly and maintenance of a tower for a wind turbine in accordance with at least one of claims 1 to 11 as an assembly, maintenance, service, rescue and/or transport platform.

## Revendications

1. Dispositif de montage et d'entretien d'une tour pour une éolienne, le dispositif comprenant une plate-forme de travail (6) destinée à être utilisée à l'intérieur de la tour, la plate-forme de travail comprenant une plate-forme de base (20) ayant une découpe pour une structure de support verticale, dans lequel la plate-forme de base (20) a une forme circulaire et a au moins un élément de guidage et/ou de support arqué à la périphérie,
**caractérisé en ce que**
la plate-forme de travail (6) comprend au moins une passerelle (22) accessible, radialement rétractable et extensible, qui est montée de manière mobile sur la plate-forme de base (20) et une plate-forme de guidage (21), et **en ce qu'**un entraînement pour déplacer la passerelle (22) le long de l'élément de guidage et/ou de support arqué est monté sur la plate-forme de base (20) et/ou la plate-forme de guidage (21).

2. Dispositif selon la revendication 1, **caractérisé en ce que**
la passerelle (22) présente à une extrémité dirigée à l'opposé de la plate-forme de base (20) une plate-forme de travail (23) qui est formée en une ou plusieurs parties.

3. Dispositif selon l'une des revendications 1 ou 2, **caractérisé en ce que**
deux entraînements de levage électriques séparés sont montés sur la plate-forme de base (20) et/ou sur la plate-forme de guidage (21), les entraînements de levage comprenant chacun au moins un moteur électrique et un dispositif de freinage.

4. Dispositif selon l'une des revendications 1 à 3, **caractérisé en ce que**
la passerelle (22) présente un dispositif d'entraînement pour rétracter et étendre la passerelle (22).

5. Dispositif selon les revendications 2 et 4, **caractérisé en ce que**
la passerelle (22) et/ou la plate-forme de travail (23) présente un entraînement pour faire pivoter au moins une section de la plate-forme de travail (23) autour d'un axe vertical, lequel entraînement est couplé mécaniquement à l'entraînement pour rétracter et étendre la passerelle (22) ou est conçu comme un entraînement séparé.

6. Dispositif selon l'une quelconque des revendications 1 à 5, **caractérisé en ce que** la plate-forme de travail (6) présente une seconde passerelle (22) accessible, radialement rétractable et extensible, qui est montée mobile sur la plate-forme de base (20) et la plate-forme de guidage (21), au moins un autre entraînement pour déplacer la seconde passerelle (22) le long de l'élément de guidage et/ou de support arqué étant monté sur la plate-forme de base (20) et/ou la plate-forme de guidage (21).

7. Dispositif selon la revendication 3, **caractérisé en ce que**
les entraînements de levage sont conçus comme des entraînements linéaires électriques qui comprennent au moins un moteur linéaire.

8. Dispositif selon au moins l'une des revendications 3 à 7, **caractérisé en ce que** l'entraînement pour déplacer le au moins une passerelle (22) le long de l'élément de guidage et/ou de support arqué est conçu comme un entraînement électrique linéaire qui comporte au moins un moteur linéaire.

9. Dispositif selon la revendication 4, **caractérisé en ce que**
l'entraînement pour rétracter et étendre la passerelle (22) est conçu comme un entraînement électrique linéaire qui comprend au moins un moteur linéaire.

10. Dispositif selon l'une quelconque des revendications 1 à 9, **caractérisé en ce que** un dispositif de commande et d'affichage est monté sur la plate-forme de base (20), le dispositif de commande et d'affichage étant conçu et agencé pour afficher la position verticale de la plate-forme de base (20) dans la tour.

11. Dispositif selon la revendication 10, **caractérisé en ce que**
le dispositif de commande et d'affichage est relié de manière opérationnelle à un dispositif de commande, le dispositif de commande étant conçu et agencé pour limiter la position radiale maximale extensible de la passerelle (22) ou des passerelles (22) à une valeur prédéterminable en fonction de la position verticale de la plate-forme de base (20) dans la tour.

12. Utilisation d'un dispositif de montage et d'entretien d'une tour pour une éolienne selon au moins l'une des revendications 1 à 11 comme plate-forme de montage, de maintenance, de service, de sauvetage et/ou de transport.
